# EUROPÄISCHE PATENTSCHRIFT

(11) **EP 1 844 475 B1**
(45) Veröffentlichungstag und Bekanntmachung des Hinweises auf die Patenterteilung: **16.09.2009**
(21) Anmeldenummer: 05807895.7
(22) Anmeldetag: 19.11.2005
(51) Int. Cl.: G12B 21/02, H01Q 1/38, A61N 5/04, G01N 13/14

(54) **NAHFELDSONDE**
NEAR-FIELD PROBE
SONDE À CHAMP PROCHE

(30) Priorität: 22.11.2004 DE 102004056241
(43) Veröffentlichungstag der Anmeldung: 17.10.2007
(73) Patentinhaber: Forschungszentrum Jülich GmbH, 52425 Jülich (DE); Fyzikalni Ustav Av Cr, 18221 Prag 8 (CZ)
(72) Erfinder: KLEIN, Norbert, 52428 Jülich (DE); KADLEC, Filip, Institute of Physics, 182 21 Praha 8 (CZ); KUZEL, Petr, CZ-15800 Prag 5 (CZ)
(86) Internationale Anmeldenummer: PCT/EP2005/012407
(87) Internationale Veröffentlichungsnummer: WO 2006/056373

(56) Entgegenhaltungen:
- EP-A- 0 996 117
- DE-A1- 4 231 426
- JP-A- 2004 253 100
- US-A- 4 725 727
- US-A- 5 936 237
- ROSNER B T ET AL: "Microfabricated silicon coaxial field sensors for near-field scanning optical and microwave microscopy" SENSORS AND ACTUATORS A, ELSEVIER SEQUOIA S.A., LAUSANNE, CH, Bd. 102, Nr. 1-2, 1. Dezember 2002 (2002-12-01), Seiten 185-194, XP004393675 ISSN: 0924-4247
- WEIDE VAN DER D W: "LOCALIZED PICOSECOND RESOLUTION WITH A NEAR-FIELD MICROWAVE/SCANNING-FORCE MICROSCOPE" APPLIED PHYSICS LETTERS, AIP, AMERICAN INSTITUTE OF PHYSICS, MELVILLE, NY, US, Bd. 70, Nr. 6, 10. Februar 1997 (1997-02-10), Seiten 677-679, XP000685150 ISSN: 0003-6951
- ROSNER B ET AL: "NEAR-FIELD ANTENNAS INTEGRATED WITH SCANNING PROBES FOR THZ TO VISIBLE MICROSCOPY: SCALE MODELING AND LIMITATIONS ON PERFORMANCE" IEEE TRANSACTIONS ON ANTENNAS AND PROPAGATION, IEEE SERVICE CENTER, PISCATAWAY, NJ, US, Bd. 50, Nr. 5, Mai 2002 (2002-05), Seiten 670-675, XP001059291 ISSN: 0018-926X
- KLEIN N ET AL: "A metal-dielectric antenna for terahertz near-field imaging" JOURNAL OF APPLIED PHYSICS AIP USA, Bd. 98, Nr. 1, 1. Juli 2005 (2005-07-01), Seiten 14910-1-5, XP002366369 ISSN: 0021-8979
- LAHL P ET AL: "A novel broadband probe for near-field imaging and spectroscopy from DC to THz" INFRARED AND MILLIMETER WAVES AND 13TH INTERNATIONAL CONFERENCE ON TERAHERTZ ELECTRONICS, 2005. IRMMW-THZ 2005. THE JOINT 30TH INTERNATIONAL CONFERENCE ON WILLIAMSBURG, VA, USA 19-23 SEPT. 2005, PISCATAWAY, NJ, USA,IEEE, 19. September 2005 (2005-09-19), Seiten 48-49, XP010874870 ISBN: 0-7803-9348-1

## Beschreibung

Die Erfindung betrifft eine Nahfeldsonde.

Es ist bekannt, dass das Auflösungsvermögen auf Grund von Beugungseffekten auf etwa die halbe Wellenlänge des verwendeten Mediums, z. B. Licht begrenzt ist.

Bei einem Abstand einer optischen Sonde von der Oberfläche einer Probe kleiner als die Wellenlänge der eingekoppelten Strahlung, wird der so genannte Nahfeldbereich erreicht. Durch Arbeiten im Nahfeld, lässt sich das Beugungslimit umgehen und eine Auflösung im Nanometerbereich erzielen.

Bei der Nahfeldmikroskopie und -Spektroskopie wird eine Öffnung bzw. Apertur, die kleiner als die Wellenlänge ist, über eine zu untersuchende Oberfläche einer Probe gerastert. Hierdurch wird Punkt für Punkt ein Abbild der Probe erzeugt. Bedingt durch die kleine Öffnung wird nur der Teil der Oberfläche untersucht, welcher der Messöffnung entspricht und somit erhält man nur Information aus diesem Bereich.

Übertragen auf elektromagnetische Wellen im Allgemeinen wird von einer geeigneten Strahlungsquelle sowie einer Nahfeldantenne ausgegangen, um einen Terahertzstrahl zu erzeugen. Durch Rastern des Terahertzstrahls senkrecht zu seiner Ausbreitungsrichtung über die zu untersuchende Probe, werden ortsaufgelöste Bilder erzeugt. Jedes erzeugte Pixel enthält dabei eine spektrale Information.

Aus T. Yuan et al. (T. Yuan, J.Z. Xu, X.C. Zhang, 2004. Development of Terahertz Wave Microscopes, Infrared Physics and Technology 45, 417-425) ist bekannt, ein Mikroskop im Nahfeld THz-Frequenzbereich zu betreiben, um Auflösungen im sub-µm Bereich zu erzielen. Die höchste Auflösung von etwa 150 Nanometern wird mit einem aperturlosen Sondenmikroskop erzielt, bei dem das Nahfeld, das durch Streuung einer einfallenden ausgedehnten Welle an einer feinen Metallspitze erzeugt wird, als ortsauflösende Sonde verwendet wird. Nachteilig sind dabei extrem geringe Signalintensitäten der gestreuten Strahlung sowie die Tatsache, dass Messungen der Phase wegen der periodischen Bewegung der Nadel praktisch unmöglich sind.

Aus Tselev et al. (A. Tselev, S.M. Anlage, H.N.Christen, R.L. Moreland, V.V. Talanov, A.R. Schwartz, 2003. Near-field microwave microscope with improved sensitivity and spatial resolution, Review of Scientific Instruments 74, 3167ff.) ist ein Mikrowellen-Nahfeldmikroskop mit Koxialresonatorantennen bekannt.
Nachteilig ist dieses für den Frequenzbereich oberhalb von ca. 50 Gigahertz (GHz) ungeeignet, da oberhalb dieser Frequenz in Koaxialkabeln eine zu starke Dämpfung der Wellen auftritt.

Dokument XP 105 9231 von Rosner et al. veröffentlicht eine Nahfeldantenne im THz-Gebiet.

Aufgabe der Erfindung ist es, eine Nahfeldantenne für elektromagnetische Wellen bereit zu stellen, mit der Wellen vorzugsweise im Bereich von 10 GHz bis 10 THz dispersionsfrei auf eine Fläche mit viel geringeren Abmessungen als die Wellenlänge konzentriert werden können.

Die Aufgabe wird durch eine Nafeldsonde gemäß Hauptanspruch gelöst. Vorteilhafte Ausgestaltungen ergeben sich aus den darauf jeweils rückbezogenen Patentansprüchen.

Die Nahfeldsonde umfasst einen dielektrischen Formkörper mit partieller Metallisierung.
Die Metallisierung weist vorteilhaft die Eigenschaft auf, eine elektromagnetische Welle, vorzugsweise im Frequenzbereich zwischen etwa 10 GHz und 10 THz nahezu dispersions- und verlustfrei auf eine Probefläche im Mikrometerbereich zu konzentrieren.
An der Spitze wird vorteilhaft ein sehr hohes elektrisches Wechselfeld erzeugt. Dessen Größenordnung ergibt sich aus der elektrischen Feldstärke der eingekoppelten Wellen multipliziert mit dem Verhältnis aus Wellenlänge zur Spitzenabmessungen (300 bei 100 GHz und 10 Mikrometer Spitzenabmessungen). Dies führt zu einer hohen Empfindlichkeit der die Nahfeldsonde umfassenden Vorrichtungen, wie z. B. Spektroskope, Mikroskope oder Schreib-Lese-Köpfe.

Im Rahmen der Erfindung wurde erkannt, dass die partielle Metallisierung auf dem dielektrischen Formkörper vorteilhaft eine sich ausbreitende elektromagnetische Welle in ein Kondensatorfeld an der Spitze der Nahfeldantenne überführt, dessen Frequenz der Frequenz der eingekoppelten Welle entspricht.
Dadurch wird vorteilhaft eine Sonde für ortsaufgelöste Messungen mit elektromagnetischen Wellen bereitgestellt, dessen räumliche Auflösung den physikalischen Abmessungen der Spitze der Nahfeldsonde entspricht. Durch die Breitbandigkeit der Nahfeldsonde können diese ortsaufgelösten Informationen zusätzlich spektrale Information, beispielsweise über die Frequenzabhängigkeit der Dielektrizitätskonstanten einer Probe, enthalten.

Durch mindestens zwei voneinander elektrisch isolierte Metallschichten, beispielsweise auf zwei gegenüberliegenden Seiten des dielektrischen Formkörpers, wird vorteilhaft eine sich parallel zur Längsachse in Richtung der Spitze des dielektrischen Formkörpers ausbreitende elektromagnetische Welle in ein hochfrequentes Kondensatorfeld an der Spitze des dielektrischen Formkörpers überführt.Die Spitze des dielektrischen Formkörpers hat die Funktion der Sonde für ortsaufgelöste Messungen mit elektromagnetischen Wellen.

Wird die Spitze in unmittelbare Nähe einer zu untersuchenden Probe gebracht, wird die Welle nach dem Einkoppeln aus einem Teilvolumen der Probe, dessen Abmessungen von der Größenordnung der Spitze abhängig ist, in die Sonde zurück reflektiert. Hierauf wird der Reflektionsfaktor bestimmt.

Durch Analyse von Amplitude und Phase einer reflektierten oder tansmittierten Wellen werden ortsaufgelöste Informationen über die Beschaffenheit der Probe gewonnen, insbesondere über deren dielektrische Eigenschaften.

Durch symmetrisch angeordnete, voneinander isolierte Metallisierungsbereiche auf den Seiten der Spitze des dielektrischen Formkörpers wird besonders vorteilhaft bewirkt, dass die Welle ungehindert bis zu Spitze propagieren kann. Ohne eine Metallisierung würde die Ortsauflösung nicht viel kleiner als die Wellenlänge sein, bei allseitiger Metallisierung der Spitze könnte hingegen die Welle nicht bis zur Spitze propagieren. Auch der übrige Teil des dielektrischen Formkörpers unterhalb der Spitze kann symmetrische Metallisierungen aufweisen.

In jedem Fall muss die in die Probe eingekoppelte Welle linear polarisiert sein.
Die Richtung der Polarisation sollte senkrecht zu den metallisierten Flächen der Spitze sein, damit sich an der Spitze zwischen den beiden Metallisierungen das elektrische Wechselfeld aufbauen kann.

Die Metallisierung kann z. B. aus Gold, Silber oder Kupfer bestehen. Die hohe Leitfähigkeit, wirkt sich vorteilhaft auf die Empfindlichkeit einer die Nahfeldantenne umfassenden Vorrichtung aus.

Der Formkörper selbst besteht aus verlustarmen, dielektrischem Material, insbesondere aus Silizium, Saphir oder Polyethylen.
Silizium ist insbesondere für Analysen oberhalb von 100 GHz geeignet, da in diesem Bereich die geringsten Verluste auftreten und Silizium keine Dispersion des dielektrischen Verhaltens aufweist.
Saphir ist aufgrund der geringen Verluste bei Frequenzen unterhalb von 100 GHz vorteilhaft und ist zudem mechanisch sehr stabil.
Polyethylen weist ebenfalls geringe Verluste auf. Es ist zudem preiswert.

Die Grundfläche der Nahfeldsonde kann in einer weiteren Ausgestaltung der Erfindung quaderförmig ausgestaltet sein.
Die quaderförmige Grundfläche bewirkt besonders vorteilhaft, dass metallisierte Flächen leicht symmetrisch auf dem Formkörper ausgebildet werden können.
Die partielle Metallisierung kann beispielsweise durch thermisches Aufdampfen aufgebracht werden, da bei diesem Verfahren die Seiten der Sonde, die parallel zur Flugrichtung der Metallatome ausgerichtet sind, nicht beschichtet werden.

Die Nahfeldsonde weist in einer besonders vorteilhaften Ausgestaltung der Erfindung eine pyramidenstumpfförmige Spitze auf.
In Zusammenhang mit einer quaderförmigen Grundfläche wird besonders vorteilhaft bewirkt, dass elektromagnetische Wellen dispersions- und verlustfrei auf eine Probenfläche mit viel geringeren Abmessungen als die Wellenlänge konzentriert werden können. Der Pyramidenstumpf bewirkt, dass auch unmittelbar an der Spitze der erfindungsgemäßen Nahfeldantenne die Metallisierung symmetrisch angeordnet werden kann.

Durch zwei voneinander elektrisch isolierten Metallschichten auf zwei gegenüberliegenden Seiten der pyramidenstumpfartigen Spitze des dielektrischen Formkörpers, wird die sich entlang der Symmetrieachse des Pyramidenstumpfes ausbreitende elektromagnetische Welle in das erwähnte hochfrequente Kondensatorfeld an der Spitze des Pyramidenstumpfes überführt.

Es ist im Rahmen der Erfindung aber auch denkbar, andere Geometrien für die Nahfeldsonde vorzusehen, sofern symmetrische Metallisierungen auf deren Spitze angeordnet werden können.
Es ist denkbar, z. B. eine zylinderförmige Geometrie mit elliptischem oder kreisförmigem Querschnitt und entsprechend kegelförmiger Spitze, welche die symmetrische Metallisierung aufweist, vorzusehen.

Die Nahfeldsonde kann erfindungsgemäß an einen dielektrischen Wellenleiter angekoppelt sein.
Zwischen der Nahfeldsonde und dem dielektrischen Wellenleiter kann ein Luftspalt vorgesehen sein. Die Nahfeldantenne kann auch an einen Hohlleiter angekoppelt sein.
In diesen Fällen, stellt die gesamte Sonde einen dielektrischen Resonator dar, dessen Eigenschaften, wie z. B. Resonanzfrequenz und Güte die zu untersuchende Probe, die vor der Spitze angeordnet ist, verändert wird. Dadurch sind besonders empfindliche Phasenmessungen möglich, die bei den zu erwartenden Resonatorgüten von 1000 gegenüber einer nicht resonanten Anordnung um einen Faktor 1000 empfindlicher sind.

Die Metallisierung der Spitzen kann vorteilhaft mit einer konventionellen Hochvakuum-Aufdampfanlage erfolgen.
Im Falle eines Pyramidenstumpfes als Geometrie für die Spitze der Nahfeldsonde erfolgt die Beschichtung der zu beschichtenden Seiten senkrecht zur Bewegungsrichtung der Teilchen in der Bedampfungsanlage. Eventuell verbleibende dünne Metallschichten auf den nicht zu beschichtenden Seiten des Pyramidenstumpfes lassen sich z. B. mit Ionenstrahlätzen entfernen.

Der Durchmesser der Spitze an deren kleinster Stelle beträgt bezogen auf deren Grundfläche vorteilhaft weniger als einen Mikrometer, z. B. etwa 50 Nanometer.

Letzteres kann z. B. mit einem focussed ion beam machining (VIB) erreicht werden.
Dadurch wird besonders vorteilhaft bewirkt, dass sich Informationen nanoskaliger Pixel extrem schnell mit Taktfrequenzen bis zu Terahertzfrequenzen auslesen lassen.
Es ist in diesem Zusammenhang denkbar, aufgrund der durch das erzeugte Wechselfeld hohen Feldstärken am Ende der Spitze in einer Größenordnung von bis zu 10⁸ V/m, in ferroelektrische Schichten, wie z. B. Barium-Strontium-Titanat, nanometerskalige Domänen mit permanenter Polarisation einzuschreiben. Das Auslesen der Nanopixel erfolgt z. B. über eine Änderung des Reflektionsfaktors der THz-Welle in Bereichen mit eingeschriebener, remanenter elektrischer Polarisation. Dadurch fungiert die Nahfeldsonde als Schreib-Lesekopf für z. B. ferroelektrische Festplatten. Die übertragenen Datenraten liegen dabei im Bereich von Gigabit/sec, und sind somit deutlich höher, als die konventioneller Festplatten.
Als Speichermedium sind auch bistabile Moleküle denkbar, die in zwei verschiedenen Konformationen existieren. In diesem Fall lassen sich Übergänge zwischen den zwei Zuständen durch Terahertzstrahlung induzieren.
Für die erforderlichen schnellen Messungen der Amplitudenänderungen der reflektierten Terahertz-Welle können z. B. supraleitende Josephson-Kontakte verwendet werden. In Analogie zu einer Festplatte, rotiert dabei das planare Speichermedium unter der erfindungsgemäßen Nahfeldsonde.

Im Weiteren wird die Erfindung an Hand von Ausführungsbeispielen und den beigefügten Figuren näher beschrieben.
Fig. 1 zeigt eine schematische Aufsicht der erfindungsgemäßen Nahfeldsonde.
Fig. 2 zeigt die Verteilung des elektrischen Feldes an der erfindungsgemäßen Nahfeldsonde.
Fig. 3 bis 5 zeigen in Aufsicht drei erfindungsgemäße Nahfeldsonde und deren Anordnungen in Vorrichtungen zur Nahfeldmikroskopie bzw. -Spektroskopie.

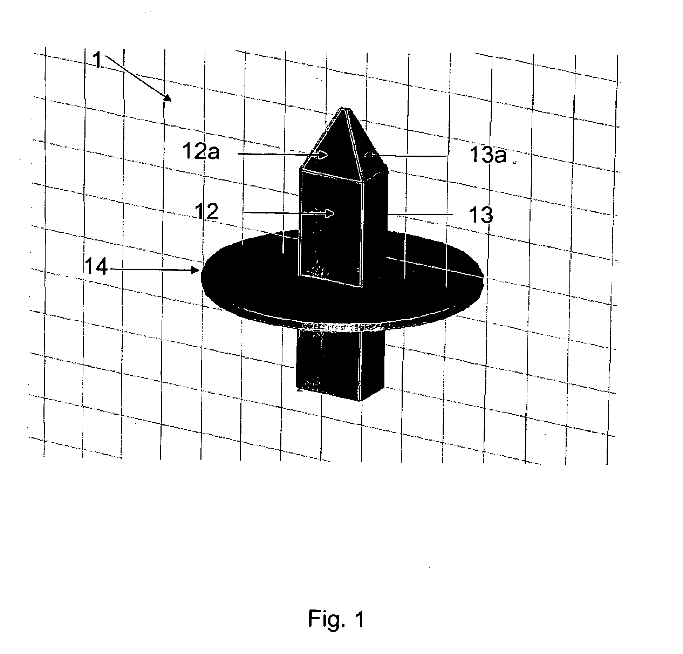

Gemäß der Fig. 1 umfasst die Nahfeldsonde 1 einen dielektrischen Formkörper aus einem rechteckig geformten Block mit den Seiten 12, 13. Der Formkörper besteht aus dielektrischem Material, z. B. Silizium, Saphir oder Polyethylen.

An einem Ende weist der Formkörper eine pyramidenstumpfförmige Spitze mit den Flächen 12a, 13a auf. Die Spitze weist an der Fläche 13a und der dieser Fläche gegenüberliegenden Fläche eine Metallisierung aus z. B. Gold, Silber oder Kupfer zumindest im Bereich der Spitze auf. Neben der Fläche 13a ist also auch die dieser Fläche gegenüberliegende Fläche metallisiert. Auf diese Weise wird die Metallisierung symmetrisch ausgebildet. Nicht metallisiert sind die Flächen 12a und die dieser Fläche gegenüberliegende Fläche.

Auch der dielektrische Formkörper ist an den Flächen 13 und der dieser Fläche gegenüberliegenden Fläche symmetrisch metallisiert. Nicht metallisiert sind wiederum die Flächen 12 und die dieser Fläche gegenüberliegende Fläche.

Die elektromagnetische Welle wird von der flachen Seite in die Nahfeldsonde 1 eingestrahlt. Dazu wird eine ebene Welle auf die der Spitze gegenüberliegende Fläche fokussiert. Die Abmessungen dieser Fläche sollten mindestens so groß sein, wie der Strahldurchmesser, das heißt einige Wellenlängen groß.

Die Spitze der Nahfeldsonde 1 wird somit aus den Flächen 12a, 13a und den diesen Flächen gegenüberliegenden Flächen als Pyramidenstumpf ausgebildet. Die Spitze ist an ihrem freien Ende abgeflacht. Dadurch wird die Wirkung erzielt, dass das erzeugte hochfrequente Kondensatorfeld sehr homogen ist, was für die erzielbare räumliche Auflösung vorteilhaft ist.

Eine runde Halterung 14 aus Metall oder einem anderen verlustarmen Dielektrikum, z. B. aus Teflon im Falle einer Siliziumspitze, wird zum Einbau der Nahfeldsonde in eine Anordnung zur Spektroskopie oder Mikroskopie oder eines Schreib-Lese-Kopfes verwendet. Die Dielektrizitätskonstante der Halterung ist vorzugsweise mindestens um einen Faktor zwei niedriger, als das Material der Nahfeldsonde.

Die über einen dielektrischen Wellenleiter in die Nahfeldantenne eintretende elektromagnetische Welle regt zunächst die Grundmode an. Es ist bekannt, das diese Mode keine untere Grenzfrequenz aufweist, so dass die Welle nach Eintritt in die Nahfeldsonde durch den sich verengenden Querschnitt bis hin zur Spitze propagieren kann. Bei genügend kleinem, vom Brechungsindex des verwendeten Materials abhängigen Winkel, sowie der Schräge des Pyramidenstumpfes kann aufgrund der inneren Totalreflexion die Welle nicht über die nicht metallisierten Seiten austreten. Dadurch wird die dielektrische Wellenleitermode graduell über die Länge des Pyramidenstumpfes in einen Wellentyp umgewandelt, der dem einer Streifenleitung entspricht. Das heißt, dass die elektromagnetischen Felder zwischen den beiden Metallisierung geführt werden. Dieser kontinuierliche Übergang des Wellentyps erfolgt ohne nennenswerte Dispersion und Dämpfung über einen sehr weiten Frequenzbereich von mindestens 10 GHz bis 10 THz. Durch die Pyramidenform der Spitze wird außerdem erreicht, dass die Wellenimpedanz im Bereich der Spitze konstant ist. Dadurch wird über einen weiten Frequenzbereich an der Spitze das gewünschte räumlich stark begrenzte Wechselfeld durch die eingekoppelte Welle erzeugt.

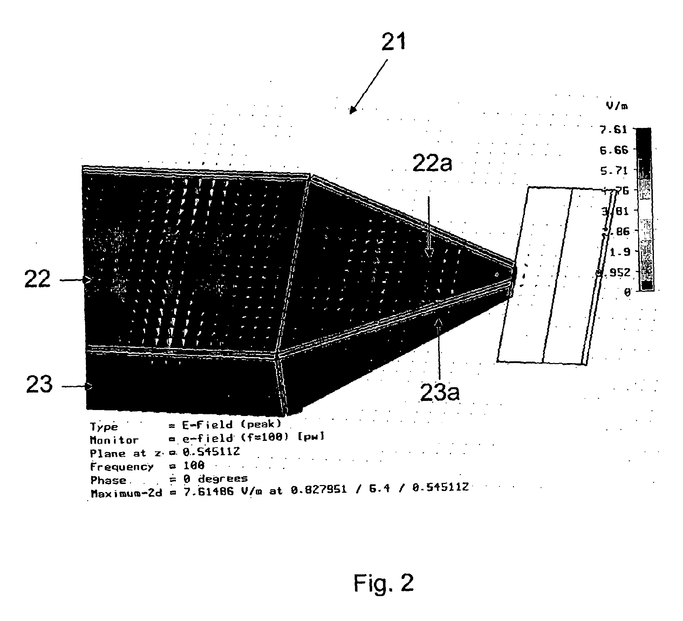

Fig. 2 zeigt die berechnete Verteilung des elektrischen Feldes an der Spitze 22a, 23a der Nahfeldsonde 21. Am Ende des Pyramidenstumpfes der Spitze entsteht nach Einkoppeln und Weiterleiten der Welle ein hochfrequentes, räumlich stark konzentriertes Wechselfeld ähnlich dem eines Plattenkondensators, wie aus der berechneten Feldverteilung gemäß der Fig. 2 ersehbar ist. Die räumliche Ausdehnung des hochfrequenten Wechselfeldes bzw. der Spitze definieren die erreichbare räumliche Auflösung der Sonde. Das Streufeld des Kondensators durchsetzt die Probe, die sich unmittelbar vor der Sonde befindet, und stellt somit eine empfindliche Sonde dar. Wird eine Probe mit räumlich variierenden dielektrischen oder metallischen Eigenschaften in die Nähe der Nahfeldantenne 1, 21 gebracht, so ändern sich Amplitude und Phase der von der Spitze zurück reflektierten bzw. von dieser abgestrahlten Welle. Diese sind als Messsignale mit entsprechenden Detektoren für den jeweiligen Frequenzbereich, z. B. mittels Schottky-Dioden bis ca. 200 GHz detektierbar.

Fig. 2 zeigt die berechnete Verteilung des elektrischen Feldes für eine Frequenz von 100 GHz. Es ist deutlich, dass sich die Welle bis zur Pyramidenspitze ausdehnt. Bei der in Fig. 2 gezeigten Nahfeldsonde betragen die Abmessungen der Spitze ca. 100 Mikrometer Kantenlänge bei einer Wellenlänge von 3 mm bei 100 GHz. Im rechten Teil der Fig. 2 ist das hochfrequente Kondensatorstreufeld als Pfeile rechts der Spitze angedeutet, das die eigentliche Sonde für ortsaufgelöste Messungen darstellt.

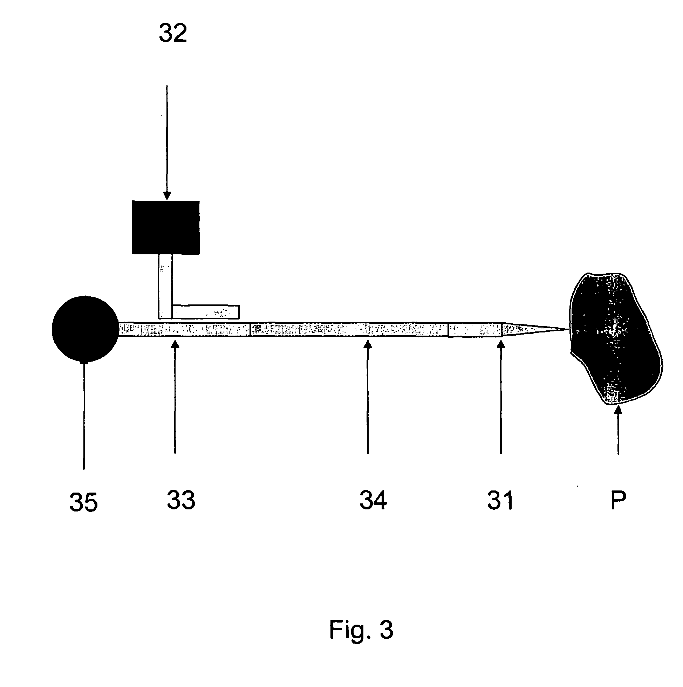

Gemäß Fig. 3 wird die von einer Millimeterwellen-Quelle 35, z. B. einem Gunnoszillator oder einem Backward-Wave Oszillator ausgehende monochromatische Welle über einen Richtkoppler 33, durch den die von der Probe P reflektierte Welle zu einer Detektordiode 32 geleitet wird, über einen flexiblen dielektrische Wellenleiter 34 in die erfindungsgemäße Nahfeldsonde 31 eingekoppelt. Dabei kann der Wellenleiter 34 und die Nahfeldsonde 31 aus einem Stück aus z. B. hochdichtem Polyethylen angefertigt sein.
Alternativ ist es möglich, zwischen Sonde 31 und Wellenleiter 34 einen Luftspalt der Größe von weniger als einer halben Wellenlänge, also beispielsweise von 1 mm bei 100 GHz zu belassen. Die Sonde 31 ist aus einem verlustarmen dielektrischem Material wie z. B. Saphir gefertigt, und stellt einen dielektrischen Resonator mit hoher Güte dar, durch den die durch die Probe P hervorgerufenen Änderung von Resonanzfrequenz und Güte über die Messung des reflektierten Signals detektierbar sind.

Die Vorrichtung gemäß Fig. 3 ist für in-vivo Anwendungen in der Dermatologie, z. B bei der Früherkennung von Hautkrebs geeignet, während der Frequenzen mit unterschiedlich starker Absorption für Wasser miteinander verglichen werden. Aufgrund des mechanisch flexiblen Wellenleiters ist es möglich, diese Messvorrichtung auch oral anzuwenden.

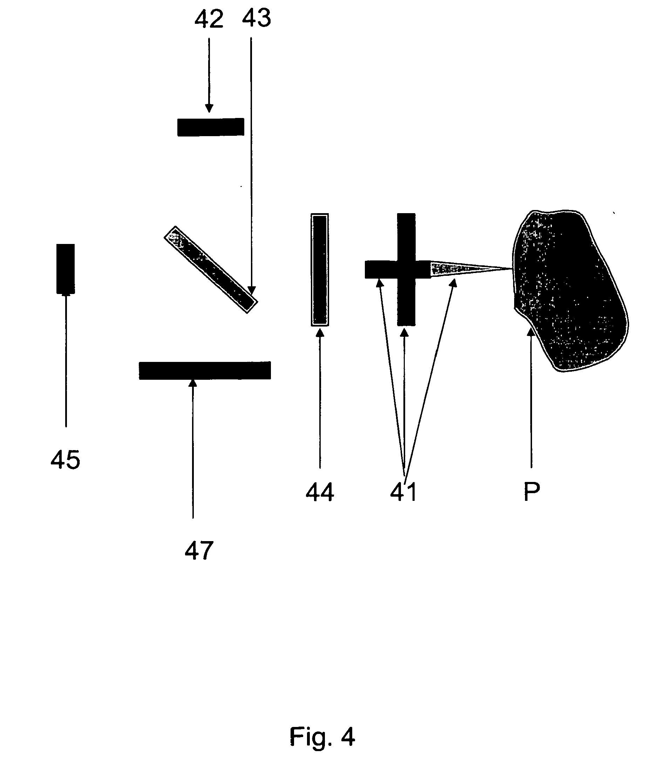

Die in den Fig. 4 bis 5 gezeigten Nahfeldsonde 41, 51 umfassen, wie in Fig. 1 gezeigt, je eine Spitze, einen dielektrischen Formkörper und eine Halterung.

Fig. 4 zeigt eine möglich Anordnung zur ortsaufgelösten Terahertz-Nahfeldspektroskopie basierend auf einer Pikosekunden-Zeitbereichsspektroskopie. Dabei wird der von einem Femtosekunden-Laserpuls am Emitter 45 erzeugte elektrische Puls mit einer Zeitdauer von ca. einer Pikosekunde als frei propagierende Welle durch Spiegel oder Linsen (nicht dargestellt) auf die flache Rückseite der Sonde 41 fokussiert. Als Material der erfindungsgemäßen Nahfeldsonde 41 ist hochohmiges Silizium vorgesehen, das geringe Verluste und nahezu keine Dispersion im Terahertz-Bereich aufweist. Silizium ist aufgrund seines anisotropen Ätzverhaltens besonders geeignet, Spitzen mit Abmessungen im Submikrometerbereich herzustellen. Das von der Probe P reflektierte Signal wird über einen teilreflektierenden Spiegel oder einen Draht-Polarisationsfilter 43, der um 45 Grad verkippt zur Ausbreitungsrichtung der Welle angeordnet ist, in den Detektor 42 eingekoppelt. Im Falle des Draht-Polarisationsfilters 43 ist ein zweites Polarisationsfilter 44 zur Unterdrückung der Anregung von Moden mit falscher Polarisation vorteilhaft. Ein zusätzlicher Absorber 47 kann zur Vermeidung von Echosignalen durch parasitäre Ausbreitungspfade verwendet werden. Spektral aufgelöste Bilder erhält man durch ein Rastern der Probe P, die in einem Abstand von weniger als die Abmessungen der Spitze vor der Sondenspitze 41 angeordnet ist, in Richtung senkrecht zur Ausbreitungsrichtung. Alternativ kann bei fester Probe auch die Sonde bewegt werden.

Als eine mögliche Anwendung lassen sich mit einem solchen Verfahren z. B. mikroelektronische Schaltkreise untersuchen.

Eine zusätzliche Tiefeninformation entsteht durch Messung der Veränderung der Pulsform des Pikosekundenpulses, etwa aufgrund von Vielfachreflexionen in der Probe. Für solche Messungen ist es wichtig, dass die Dispersion des Pikosekundenpulses nach dem Durchlaufen der erfindungsgemäßen Antenne sehr gering ist.

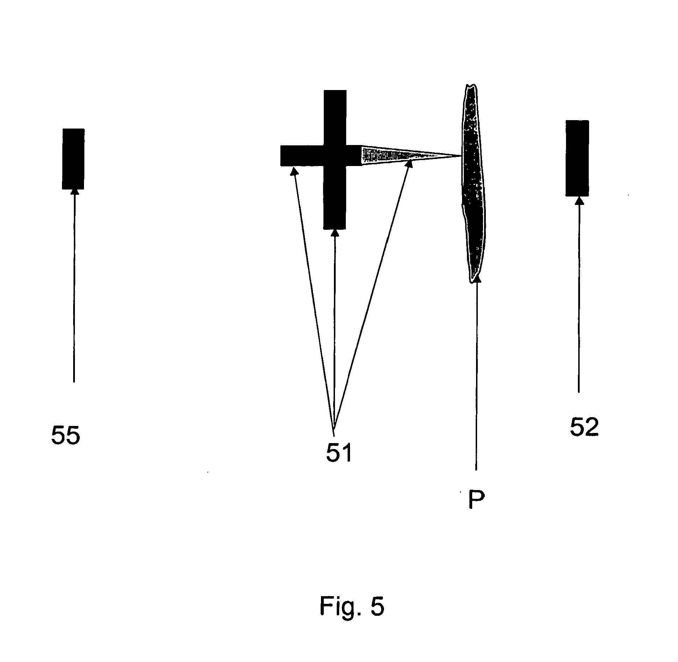

In der in Fig. 5 gezeigten Anordnung ist der Detektor 52 hinter der Probe P angeordnet. Dadurch wird das durch die Probe transmittierte Signal detektiert. Diese Anordnung bietet für sehr dünne transparente Proben eine höhere Empfindlichkeit, und ist für Terahertz-Spektroskopie an einzelnen biologischen Zellen geeignet, falls diese unmittelbar vor die Spitze gebracht werden können, z. B. mit Hilfe einer Pipette, die über Mikromanipulatoren in die unmittelbare Umgebung der Spitze gebracht wird.

Für die oben genannten Ausführungsbeispiele kann zur Verbesserung der Einkopplung einer sich frei im Raum ausbreitenden elektromagnetischen Welle in die Nahfeldantenne eine halbkugelförmige Linse so vor der Nahfeldsonde angeordnet werden, dass die plane Rückseite der Sonde auf der planen Fläche der halbkugelförmigen Linse liegt. Diese sollte aus einem Material mit möglichst identischer Dielektrizitätskonstante wie die Nahfeldsonde bestehen.

Eine weitere mögliche Verwendung der erfindungsgemäßen Nahfelsonde ist die ortsaufgelöste Bestimmung der dielektrischen Verluste im Millimeterwellenbereich von Diamantfenstern, die für die Millimeterwellen-Plasmaheizung in zukünftigen Fusionsreaktoren vorgesehen sind.

Eine weitere Verwendung besteht in der Möglichkeit der ortsaufgelösten Messung der Dielektrizitätskonstanten sowie der dielektrischen Verluste bei der Waferinspektion und Halbleiterfertigung sowie zur Untersuchung von Dotierprofilen und Oberflächendotierungen, und auch für die Inspektion von Gateoxidschichten von CMOS-Transistoren.

Eine weitere Verwendung besteht im Bereich keramischer Werkstoffe (Piezoelektrika, Ferroelekrika) in ortsaufgelösten Messungen im Hinblick auf die Unterscheidung von inter- und intragranularen Eigenschaften. Dies gilt sowohl für Bulkmaterialien als auch für Schichten.

## Patentansprüche

1. Nahfeldsonde, umfassend einen dielektrischen Formkörper mit einer pyramidenstumpfförmigen Spitze bei der zwei voneinander elektrisch isolierte und sich gegenüberliegende Seiten der Spitze metallisiert sind.

2. Nahfeldsonde, nach Anspruch 1,
**gekennzeichnet durch**
eine symmetrische Metallisierung.

3. Nahfeldsonde nach Anspruch 1 oder 2,
**gekennzeichnet durch**
einen rechteckigen Querschnitt des dielektrischen Formkörpers.

4. Nahfeldsonde nach einem der vorhergehenden Ansprüche,
**gekennzeichnet durch**
hochohmiges Silizium, Saphir oder Polyethylen als Material für den dielektrischen Formkörper.

5. Nahfieldsonde nach einem der vorhergehenden Ansprüche,
**gekennzeichnet durch**
Gold, Silber oder Kupfer als Metallisierung.

6. Nahfeldsonde nach einem der vorhergehenden Ansprüche,
bei der das erzielbare räumliche Auflösungsvermögen den physikalischen Abmessungen der Spitze der Nahfeldsonde entspricht.

7. Spektroskop, Mikroskop oder Schreib-Lese-Kopf,
umfassend eine Nahfeldsonde nach einem der vorhergehenden Ansprüche 1 bis 6.

8. Verwendung einer Nahfeldsonde nach einem der vorhergehenden Ansprüche bis 6 in einem Frequenzbereich von vorzugsweise 10 Gigahertz bis 10 Terahertz.

## Claims

1. Near-field probe comprising a dielectric moulded body with a truncated pyramid-shaped tip, wherein two mutually electrically insulated, opposing sides of the tip are metallised.

2. Near-field probe according to claim 1, **characterised by** symmetrical metallising.

3. Near-field probe according to claim 1 or 2, **characterised by** a rectangular cross-section of the dielectric mould body.

4. Near-field probe according to one of the preceding claims, **characterised by** high-resistance silicon, sapphire or polyethylene as the material for the dielectric moulded body.

5. Near-field probe according to one of the preceding claims, **characterised by** gold, silver or copper as the metallising.

6. Near-field probe according to one of the preceding claims, wherein the spatial resolving power that is achievable corresponds to the physical dimensions of the tip of the near-field probe.

7. Spectroscope, microscope or read-write head, comprising a near-field probe according to one of the preceding claims 1 to 6.

8. Use of a near-field probe according to one of the preceding claims 1 to 6 in a frequency range of preferably 10 Gigahertz to 10 Terahertz.

## Revendications

1. Sonde à champ proche comportant un corps de moulage diélectrique avec une pointe en forme de tronc de pyramide, où les deux côtés de la pointe, isolés mutuellement du point de vue électrique et se faisant face, sont métallisés.

2. Sonde à champ proche selon la revendication 1,
**caractérisée par**
une métallisation symétrique.

3. Sonde à champ proche selon la revendication 1 ou 2,
**caractérisée par**
une section transversale rectangulaire du corps de moulage diélectrique.

4. Sonde à champ proche selon l'une quelconque des revendications antérieures,
**caractérisée par**
l'utilisation du silicium, du saphir ou du polyéthylène à haute résistance électrique comme matériau pour le corps de moulage diélectrique.

5. Sonde à champ proche selon l'une quelconque des revendications précédentes,
**caractérisée par**
l'utilisation de l'or, de l'argent ou du cuivre comme métallisation.

6. Sonde à champ proche selon l'une quelconque des revendications précédentes,
où la résolution spatiale atteignable correspond aux dimensions physiques de la sonde à champ proche.

7. Spectroscope, microscope ou tête de lecture/écriture comportant une sonde à champ proche selon l'une quelconque des revendications précédentes 1 à 6.

8. Utilisation d'une sonde à champ proche selon l'une quelconque des revendications précédentes 1 à 6 dans une plage de fréquences comprise de préférence entre 10 gigahertz et 10 térahertz.
